# EUROPEAN PATENT SPECIFICATION

(11) **EP 0 410 367 B1**
(45) Date of publication and mention of the grant of the patent: **17.03.1993**
(21) Application number: 90114137.4
(22) Date of filing: 24.07.1990
(51) Int. Cl.: B29D 23/22, B29C 35/12

(54) **Machine for the production of vulcanized rubber tubing**
Maschine zur Herstellung von vulkanisiertem Gummischlauch
Machine pour la fabrication de tuyau en caoutchouc vulcanisé

(30) Priority: 28.07.1989 IT 4167089
(43) Date of publication of application: 30.01.1991
(73) Proprietor: DEREGIBUS A. & A. S.P.A., I-35030 Saccolongo (Padova) (IT)
(72) Inventor: Deregibus, Alfio, I-35100 Padova (IT)
(74) Representative: Modiano, Guido, Dr.-Ing.

(56) References cited:
- EP-A- 0 223 746
- EP-A- 2 810 016
- DE-A- 2 117 042
- DE-A- 2 750 640
- US-A- 3 240 645

## Description

The present invention relates to a machine for the production of vulcanized rubber tubing.

Fixed-position mandrels are currently used for the production of vulcanized rubber tubing; each mandrel rotates a metallic core which is supported in a plurality of points by roller-fitted rests which are rigidly associated with a long bed.

A plurality of successive layers of bands of fabric and crude rubber are wrapped on the core in a helix by means of an operator who is carried by a trolley which moves at constant speed.

The last wrapping is constituted by a tightly wrapped binding.

At this point the core on which the rubber tubing is wrapped is taken from the supporting bed and is inserted in an autoclave, where the rubber is subjected to a steam vulcanization process.

The tubing is then removed from the autoclave, unwrapped and moved to an extraction station where it is freed from the core and wrapped in coils.

This widespread production method entails very bulky and expensive devices and systems, large work spaces and the use of a considerable number of specialized operators.

This naturally negatively affects production yields and costs.

Due to this reason, machines have been provided which perform vulcanization by means of the Joule effect by feeding electric current to the cores surrounded by the tubing to be vulcanized.

The cores, which have high electric resistance, heat and cause the vulcanization of the rubber.

Thermally insulated openable beds, arranged flanking the line of said cores and adapted to contain said cores during vulcanization, have therefore been provided.

These last machines for the production of rubber tubing, however, are not yet optimum from the point of view of production yields, of automation and also of plant costs.

The aim of the present invention is to provide a machine for the production of vulcanized rubber tubing which allows higher production yields than current ones and a reduction in the operating personnel.

A consequent primary object is to provide a machine which concentrates in the same place all the operations suitable for the production of vulcanized rubber tubing by means of the Joule effect.

Another object is to provide a machine which allows to considerably reduce the plant costs required by the production of vulcanized rubber tubing.

Not least object is to provide a machine which allows the production of tubing of different types and characteristics while always operating in the same conditions.

This aim, these objects and others which will become apparent hereinafter are achieved by a machine for the production of vulcanized rubber tubing, characterized in that it comprises a pair of opposite heads with mandrels which are adapted to rotate at least one tubular core supported by first roller-fitted resting elements which are fixed on a supporting frame, the line of said rollers being flanked by a thermally insulated openable box-like container adapted to contain said core which is surrounded by the tubing to be vulcanized and is unloaded by transfer means associated with the frame, the heads of said container having electric terminals for supplying power to said core and for heating it by means of the Joule effect, removal means being adapted to transfer said core from said container onto second retractable roller-fitted resting elements, articulated to said frame, for extracting the core from the vulcanized tubing by injecting air.

Further characteristics and advantages will become apparent from the detailed description of an embodiment of the invention, illustrated only by way of non-limitative example in the accompanying drawings, wherein:

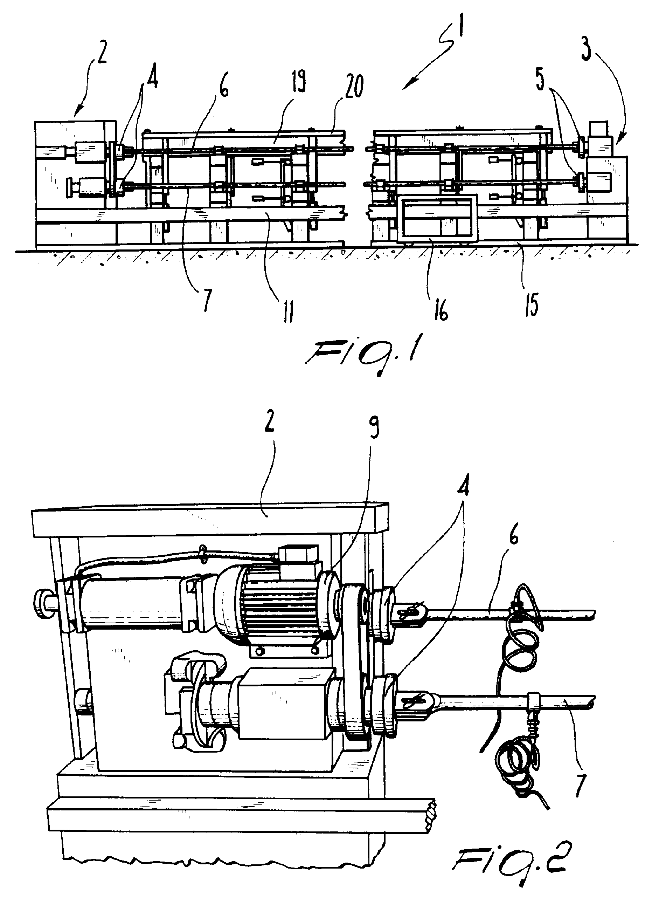

figure 1 is a front view of the machine according to the invention;
figure 2 is a first enlarged perspective view of a head comprised in the machine of figure 1;
figure 3 is a second enlarged perspective view of the head of figure 2;
figure 4 is an enlarged perspective view of a middle portion of the machine of figure 1;

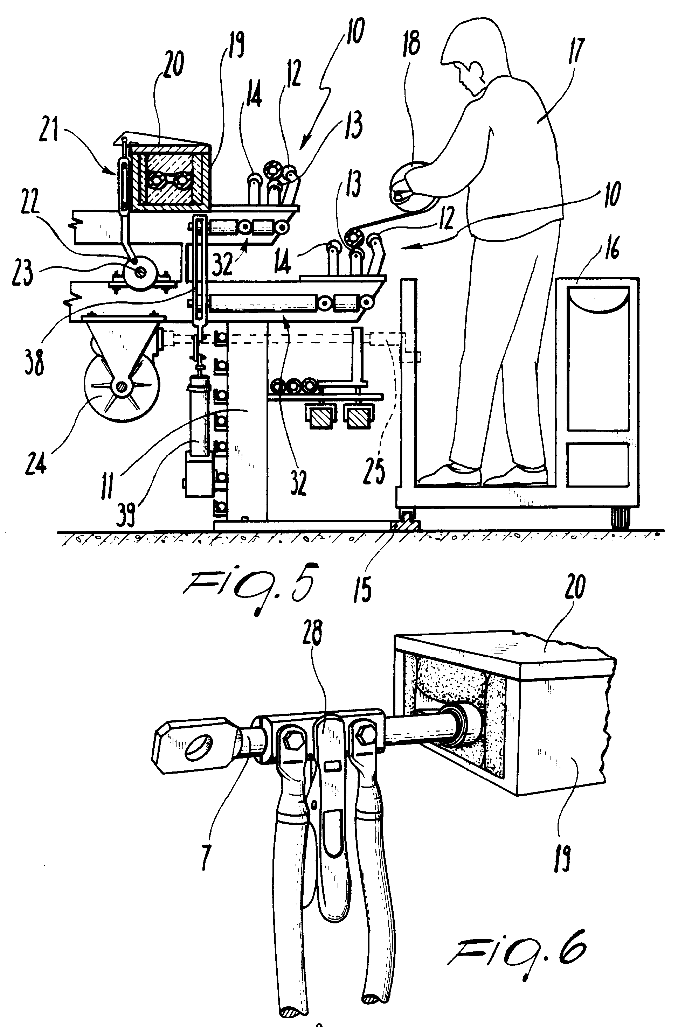

figure 5 is a transverse sectional view of the machine of figure 1 during the process of wrapping band of rubber on a metallic core for the production of a tube;
figure 6 is an enlarged perspective view of the electric power supply terminals used for vulcanization;

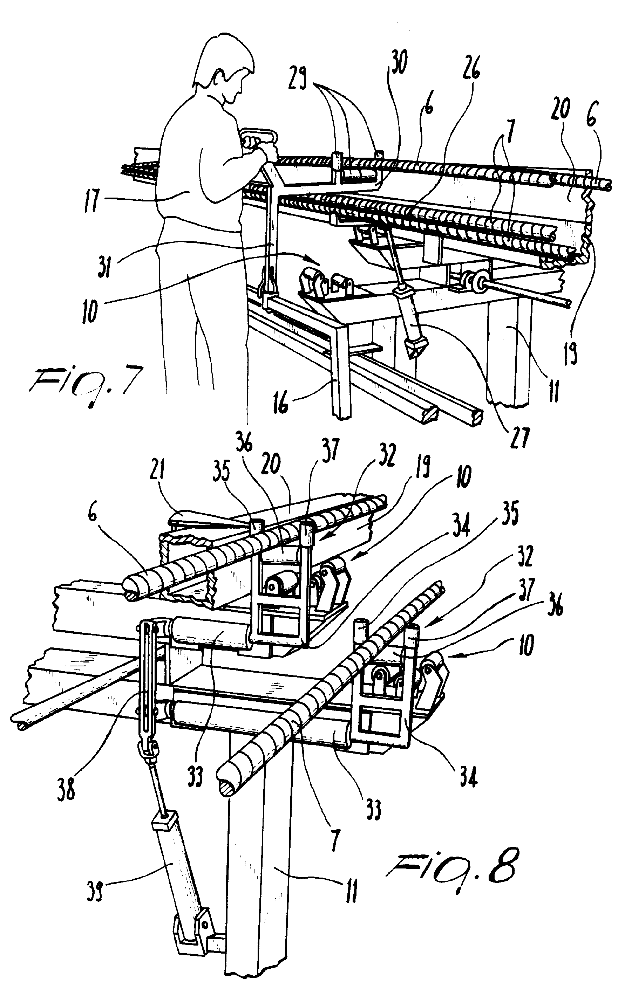

figure 7 is a perspective view of the machine during the step of unloading the vulcanized tubing;
figure 8 is an enlarged perspective view of retractable roller-fitted resting elements comprised in the machine according to the invention.

With reference to the above described figures, the machine according to the invention is generally indicated by the reference numeral 1 and comprises two heads, respectively 2 and 3, of which at least one is motorized.

Each head has two mandrels, respectively two first ones indicated by 4 and two second ones indicated by 5, by means of which the ends of two tubular metallic cores 6 and 7 are gripped.

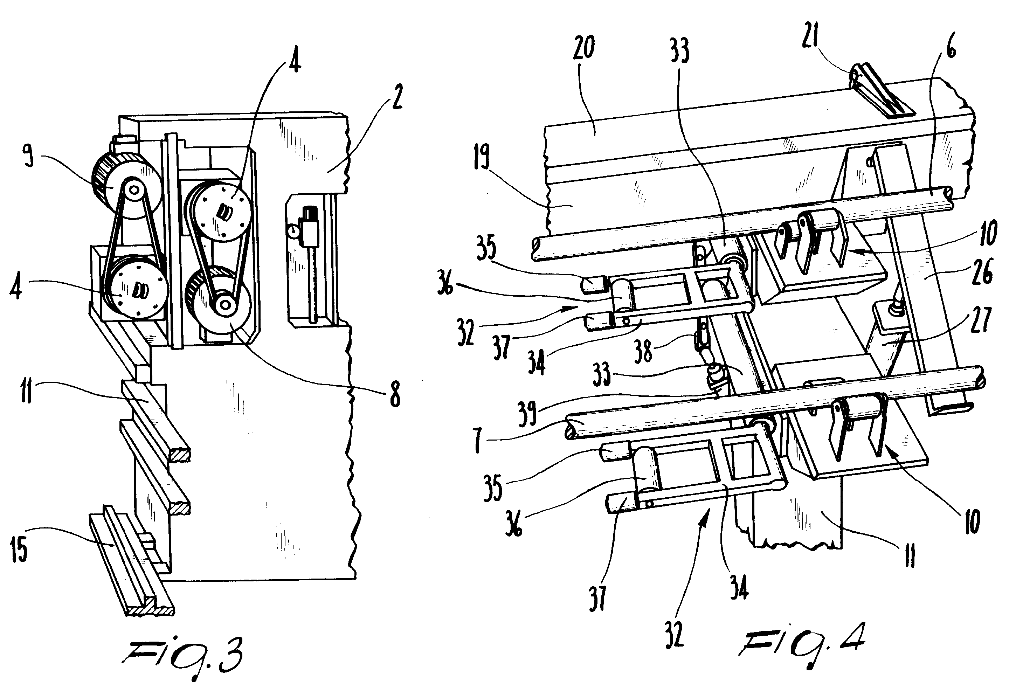

As can be seen in figures 2 and 3, each of the mandrels 4 is kinematically connected to an actuation motor, respectively 8 and 9, fixed to the head 2.

The two metallic cores 6 and 7, which are arranged on horizontal parallel axes which are at different heights with respect to the floor, are supported by first roller-fitted supports 10 which are conveniently spaced so as to avoid excessive flexing during processing and are fixed to a supporting frame 11 made of metallic profiled elements.

Each support 10 comprises three rollers, respectively 12, 13 and 14, which are arranged parallel to the corresponding core 6 or 7 so as to allow the resting and rolling thereof with low friction and consequently also allow to perform without hindrance the wrapping of spirals of fabric and crude rubber used for the production of the tubing.

Said cores 6 and 7 are positioned in front of a longitudinal rail 15 which is fixed to the ground and on which a trolley 16 is slidable and carries an operator 17 with the coil 18 of material to be wrapped in a spiral on each of said cores.

A thermally insulated box-like container 19, provided with an upper lid 20 which is pivoted thereto on the side opposite to said cores 6 and 7, is fixed on the frame 11 substantially for the entire length of the machine 1 and is arranged substantially flanking the core 6, which is in a higher position.

Said lid 20 can be opened by actuating lever systems 21 associated with respective pins 22 which are eccentrically coupled to a rotation shaft 23, the actuation whereof, by means of transmission elements, is provided by a helical worm gear system 24 actuated by a crank 25 arranged in the front part of the machine 1.

As can be seen in figure 4, a plurality of bars 26 is articulated to said frame 1; said bars are actuated by respective hydraulic pistons 27 adapted to raise said cores 6 and 7 wrapped by the tubes to be vulcanized, which are bound with a tight wrapping, so as to constitute inclined planes for the sliding of said cores into said container 19 after the opening of the lid 20.

Electric terminals 28 are located at each head of said box-like container 19 and are adapted to be coupled to the ends of said cores 6 and 7, allowing the flow of electric current therein.

The flow of electric current causes, by means of the Joule effect, the heating of the cores to a preset temperature which causes the vulcanization of the crude rubber wrapped thereon.

After a convenient heating time, the lid 20 is then opened and the end of each core can be raised manually and placed between the rollers 29 of a U-shaped support 30 which extends from an element 31 made of metal tubing which can be fixed to said trolley 16 which, by being slid along the machine 1, returns each core 6 and 7 onto said bars 26, which are placed in a horizontal arrangement.

Pairs of second roller-fitted resting elements 32 are articulated to the frame 11; each resting element is constituted by a horizontal element 33 which is transverse to the machine 1 and by a subframe 34 which is perpendicular to the axis of the horizontal element 33; rollers 35, 36 and 37 are rotationally coupled to the U-shaped end of said subframe 34, and said pairs can rotate along planes which are parallel to the axes of said cores 6 and 7 between a position in which the subframes 34 are horizontal and a vertical position which is suitable for raising them to allow the removal of the vulcanized rubber tubing.

The horizontal elements 33 are in fact fixed to the ends of a corresponding four-bar linkage 38 which is coupled to the frame 1 and is actuated by a hydraulic piston 39.

A simple removal operation is then performed by injecting air, with a method already currently in use, with the cores supported by the resting elements 32.

The machine according to the invention, the operation whereof is evident from what has been described above, allows in practice a single operator, located on the trolley 16, to perform passes so as to produce one pair of tubing while another pair is subjected to vulcanization in the thermally insulated box-like container 19.

When the wrapping work is completed and the vulcanization of the tubing inside the container 19 is completed, a swap is substantially performed between the tubing ready for vulcanization and the already-vulcanized tubing, the first ones being taken from the bars 26 and caused to roll to the side of the container 19, the second ones being taken from the element 31 and subsequently subjected to extraction.

It can thus be seen that a single operator can monitor and perform all the operations which range from wrapping to vulcanization to the extraction of the finished product without movements or transfers in different machines or devices.

Among the advantages obtained with respect to known machines, a first most important one is constituted by the small bulk of the machine according to the invention, with a more rational use of the available spaces.

Other advantages consist of the considerable reduction of personnel, with consequent increase in productivity, by virtue of the elimination of the means adapted to move the product from one machine to another.

In practice it has thus been observed that the machine according to the invention has brilliantly achieved the intended aim and objects.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine for the production of vulcanized rubber tubing, characterized in that it comprises a pair of opposite heads (2, 3) with mandrels (4, 5), which are adapted to rotate at least one tubular core (6, 7) supported by first roller-fitted resting elements (10) which are fixed on a supporting frame (11), the line of said rollers being flanked by a thermally insulated openable box-like container (19) adapted to contain said core which is surrounded by the tubing to be vulcanized and is unloaded by transfer means coupled to the frame, the heads of said container having electric terminals (28) for supplying power to said core and for heating it by virtue of the Joule effect, removal means being adapted to transfer said core from said container onto second retractable roller-fitted resting elements (32) which are articulated to said frame for the extraction of the core from the vulcanized tubing by injecting air.

2. Machine according to claim 1, characterized in that said first roller-fitted resting element (10), positioned at appropriate intervals on said frame (11), are arranged in groups of three with rollers (12, 13, 14) parallel to the axis of the corresponding core (6, 7), forming containment regions and allowing the rolling of the corresponding core with low friction and the wrapping without hindrance of spirals of fabric and crude rubber for the manufacturing of the tubing.

3. Machine according to claims 1 and 2, characterized in that a rail (15) is arranged on the ground parallel to said frame for the sliding of a trolley (16) adapted to carry an operator from one side of the machine to the other for the various production operations.

4. Machine according to one or more of the preceding claims, characterized in that said thermally insulated box-like container (19) comprises an upper lid (20) which is pivoted thereto and can be opened by means of lever systems (21) associated with a rotation shaft (23) which is actuated by a helical worm gear system (24) with a related crank (25).

5. Machine according to one or more of the preceding claims, characterized in that said transfer means coupled to the frame are constituted by a plurality of bars (26) which are articulated to said frame in a region flanking said box-like container (19), said bars rotating in vertical planes which are transverse to the machine and being actuated by hydraulic pistons (27).

6. Machine according to one or more of the preceding claims, characterized in that said removal means are constituted by an element (31) made of metallic tubing which can be fixed to said trolley (16) and from which there extends a U-shaped support (30) to which rollers (29) are rotationally coupled, the transfer of said core (6) on said bars (26) articulated to said frame and arranged horizontally being obtained by transferring an end of said at least one core onto said U-shaped support and moving said trolley.

7. Machine according to one or more of the preceding claims, characterized in that said second resting elements (32) are constituted by horizontal elements (33) which are arranged transversely with respect to the machine and from which there extend respective subframes (34) with a U-shaped end on which rollers (35, 36, 37) adapted to allow the sliding of said core (6, 7) are rotationally coupled, said second resting elements being capable of rotating between a position in which the subframes are horizontal and a position in which said subframes are vertical, along vertical planes which are parallel to said machine, said horizontal elements (33) being coupled to connecting rod systems (38) actuated by respective hydraulic pistons (39).

## Patentansprüche

1. Maschine zur Herstellung von vulkanisierten Gummischläuchen, dadurch gekennzeichnet,
daß sie ein paar von einander gegenüberliegenden Köpfen (2, 3) mit Spindeln (4, 5) umfaßt, die dazu bestimmt sind, wenigstens einen rohrförmigen Kern (6, 7) drehend anzutreiben, der durch erste, rollenbestückte Abstützungen (10) abgestützt wird, die an einem Lagerrahmen (11) befestigt sind,
daß neben der Reihe dieser Rollen ein thermisch isolierter, zu öffnender, kastenähnlicher Behälter (19) angeordnet ist, der dazu bestimmt ist, die Kerne (6, 7) aufzunehmen, die mit dem zu vulkanisierenden Schlauchmaterial umgeben sind und der durch Übertragungsmittel entladbar ist, die am Lagerrahmen (11) befestigt sind,
daß die Köpfe des Behälters (19) elektrische Anschlüsse (28) zum Zuführen elektrischer Leistung zu den Kernen (6, 7) und zu deren Aufheizung aufgrund des Joule-Effektes haben und
daß Entnahmemittel vorhanden sind, die in der Lage sind, den Kern (6, 7) vom Behälter (19) auf zweite, zurückziehbare Abstützelemente (32) zu übertragen, die am Lagerrahmen (11) angelenkt sind, um den Kern (6, 7) aus dem vulkanisierten Schlauch mit Hilfe von eingeblasener Luft herauszuziehen.

2. Maschine nach Anspruch 1, dadurch gekennzeichnet, daß die ersten, rollenbestückten Abstützelemente (10), die in geeigneten Abständen am Lagerrahmen (11) angeordnet sind, als Gruppen von drei Rollen (12, 13, 14) ausgebildet sind, die parallel zur Achse des betreffenden Kernes (6, 7) verlaufen und Umfassungsbereiche bilden und ein Abrollen des betreffenden Kernes mit geringer Reibung ermöglichen sowie das Aufwickeln der Spiralen aus Gewebe und Rohgummi zur Herstellung des Schlauches nicht behindern.

3. Maschine nach den Ansprüchen 1 und 2, daduch gekennzeichnet, daß auf dem Boden parallel zum Lagerrahmen (11) eine Schiene (15) angeordnet ist, auf der ein Transportkarren (16) von einer Seite der Maschine zur anderen verschoben werden kann und der dazu bestimmt ist, eine Bedienungsperson aufzunehmen, die die verschiedenen Herstellungsschritte durchführt und überwacht.

4. Maschine nach einem oder mehreren der vorangegangenen Ansprüche, dadurch gekennzeichnet, daß der thermisch isolierte, kastenähnliche Behälter (19) einen oberen Deckel (20) umfaßt, der am Behälter (19) angelenkt ist und der mit Hilfe von Hebesystemen (21) geöffnet werden kann, die einer Drehwelle (23) zugeordnet sind, die ihrerseits über ein Schneckenradgetriebe (24) durch eine zugeordnete Kurbel (25) betätigt werden kann.

5. Maschine nach einem oder mehreren der vorangegangenen Ansprüche, dadurch gekennzeichnet, daß die Übertragungsmittel, die mit dem Lagerrahmen (11) verbunden sind, durch mehrere Leisten (26) gebildet werden, die an dem Rahmen (11) in einem Bereich angelenkt sind, der neben dem kastenähnlichen Behälter (19) liegt, wobei die Leisten (26) durch hydraulische Kolben (27) in senkrechten Ebenen bewegbar sind, die quer zur Maschine liegen.

6. Maschine nach einem oder mehreren der vorangegangenen Ansprüche, dadurch gekennzeichnet, daß die Entnahmemittel durch ein Bauteil (21) gebildet werden, das aus Metallrohren besteht, das am Transportkarren (16) befestigt sein kann und von dem aus sich eine U-förmige Abstützung (30) erstreckt, an der Rollen (29) drehbar gelagert sind, wobei die Übertragung des Kernes (6) auf die Leisten (26), die am Rahmen (11) angelenkt und nunmehr waagerecht angeordnet sind, dadurch bewirkt wird, daß ein Ende des wenigstens einen Kernes (6, 7) auf die U-förmige Abstützung (30) übertragen wird und daß danach der Transportkarren (16) bewegt wird.

7. Maschine nach einem oder mehreren der vorangegangenen Ansprüche, dadurch gekennzeichnet, daß die zweiten Abstützelemente (32) durch waagerechte Bauteile (33) gebildet werden, die in bezug auf die Maschine quer verlaufend angeordnet sind und von dem aus sich jeweils Teilrahmen (34) mit einem U-förmigen Ende erstrecken, auf dem Rollen (35, 36, 37) drehbar befestigt sind, die ein Gleiten des Kernes (6, 7) ermöglichen, wobei die zweiten Abstützelemente in der Lage sind, zwischen einer Stellung verschwenkt zu werden, in der die Teilrahmen waagerecht liegen und einer weiteren Stellung, in der die Teilrahmen senkrecht stehen, wobei die Verschwenkungsebenen parallel zur Maschine liegen und wobei die waagerechten Elemente (33) mit Verbindungsstangensystemen (38) gekoppelt sind, die jeweils durch hydraulische Kolben betätigbar sind.

## Revendications

1. Machine pour la fabrication de tuyaux en caoutchouc vulcanisé, caractérisée en ce qu'elle comprend deux têtes opposées (2, 3) pourvues de mandrins (4, 5) conçus pour faire tourner au moins un noyau tubulaire (6, 7) supporté par des premiers éléments d'appui équipés de rouleaux (10) fixés sur un bâti support (11), la ligne desdits rouleaux étant adjacente à un carter ouvrant (19) du type boîte isolé thermiquement, conçu pour contenir ledit noyau qui est entouré par le tuyau à vulcaniser et qui est retiré par un moyen de transfert associé au bâti, les têtes dudit carter ayant des bornes électriques (28) pour délivrer du courant audit noyau et pour le chauffer grâce à l'effet Joule, des moyens de retrait étant conçus pour transférer ledit noyau à partir dudit carter sur des seconds éléments d'appui équipés de rouleaux rétractables (32) qui sont articulés sur ledit bâti pour l'extraction du noyau dudit tuyau vulcanisé par injection d'air.

2. Machine selon la revendication 1, caractérisée en ce que lesdits premiers éléments d'appui équipés de rouleaux (10), positionnés à des intervalles appropriés sur ledit bâti (11), sont disposés par groupe de trois, les rouleaux (12, 13, 14) étant parallèles à l'axe du noyau correspondant(6, 7) en formant des zones de retenue et en permettant au noyau correspondant de rouler avec un frottement faible et l'enroulement sans gêne de spirales de tissu et de caoutchouc à l'état brut pour la fabrication du tuyau.

3. Machine selon les revendications 1 et 2, caractérisée en ce qu'un rail (15) est disposé sur le sol parallèlement audit bâti pour le coulissement d'un chariot (16) conçu pour porter un opérateur d'une extrémité de la machine à l'autre pour les différentes opérations de fabrication.

4. Machine selon l'une quelconque des revendications précédentes, caractérisée en ce que ledit carter (19) thermiquement isolé comporte un couvercle supérieur pivotant (20) et qui peut être ouvert au moyen de systèmes de levier (21) associés à un arbre tournant (23) qui est actionné par un système à vis sans fin (24) pourvu d'une manivelle associée (25).

5. Machine selon l'une quelconque des revendications prédentes, caractérisée en ce que lesdits moyens de transfert associé au bâti sont constitués d'une pluralité de barres (26) qui sont articulées sur ledit bâti dans une zone adjacente audit carrier (19), lesdites barres tournant dans des plans verticaux qui sont transversaux par rapport à la machine et actionnées par des vérins hydrauliques (27).

6. Machine selon l'une quelconque des revendications précédentes, caractérisée en ce que lesdits moyens de retrait sont constitués par un élément (31) réalisés sous la forme d'un tube métallique qui peut être fixé audit chariot (16) et à partir duquel s'étend un support en forme de U (30) auquel des rouleaux (29) sont associés à rotation, le transfert dudit noyau (6) sur lesdites barres (26) articulées sur ledit bâti et disposées horizontalement étant obtenu en transférant une extrémité d'au moins un noyau sur ledit support en forme de U et en déplaçant ledit chariot.

7. Machine selon l'une quelconque des revendications précédentes, caractérisée en ce que lesdits seconds éléments d'appui (32) sont constitués par des éléments horizontaux (33) qui sont disposés transversalement par rapport à la machine et à partir desquels s'étendent des bâtis secondaires respectifs (34) avec une extrémité en forme de U sur lesquels des rouleaux (35, 36, 37) sont montés à rotation pour permettre le coulissement dudit noyau (6, 7) lesdits seconds éléments d'appui pouvant pivoter entre une position dans laquelle les bâtis secondaires sont horizontaux et une position dans laquelle ces bâtis secondaires sont verticaux, dans des plans verticaux qui sont parallèles à ladite machine, lesdits éléments horizontaux (33) étant accouplés pour être reliés aux systèmes de tiges (38) actionnés par des vérins hydrauliques (39) respectifs.
